# EUROPEAN PATENT APPLICATION

(11) **EP 4 042 874 A1**
(43) Date of publication of application: **17.08.2022**
(21) Application number: 22153625.3
(22) Date of filing: 27.01.2022
(51) Int. Cl.: A23L 3/00, B67D 1/00

(54) **A PASTEURISER APPARATUS AND METHOD**

(30) Priority: 03.02.2021 EP 21155056
(71) Applicant: Unison Engineering Services Limited, Limerick, V94 E3W2 (IE)
(72) Inventor: SHEEHAN, Paul, Limerick, V94 E3W2 (IE)
(74) Representative: Weldon O'Brien Ltd.

(57) **Abstract**

A pasteurising apparatus (1) has a controller (15) linked to sensors and valves and floors, walls, and ceilings forming a pasteurising compartment (3) and a separate product tank compartment (4). The pasteurising compartment (3) houses a pasteuriser (8). The tank compartment (4) is independently accessed by a door (6) and holds product tanks (11) which may be inserted or removed without any need for access to the pasteurising compartment (4). These tanks may alternatively be linked with product dispensers (520). The tank compartment (4) is sealed by a dividing wall (7) from the pasteurising compartment (3). An external connector assembly (10) having couplers and fluid conduits links an external supply tank (51) with the pasteuriser (8), and with a tank (11), the connector assembly being mounted externally of the compartments (3, 4). The connector assembly is linked by a return pipe (13) to the tank compartment (4). Hence the product tanks may be inserted and filled and removed with any interference by personnel with the pasteurising operations. Also, in the wash mode, the wash cycle may include both the pasteuriser (8) and product tanks.

## Description

### Introduction

The present invention relates to pasteurisers.

The process of pasteurising milk to a desired standard typically requires a complex plant, and very careful handling for transfer to end-use containers. The room in which a pasteuriser is located has considerable restrictions for movement of people and procedures for cleaning and maintenance of hygiene to food standards.

Currently many vending machine processors that want to pasteurise their milk, use a batch type pasteurising method, this batch method requiring hygienic clean room buildings and equipment and process. Also, many milk vending suppliers are selling raw milk.

The present invention is directed towards providing for simpler pasteurisation of milk without sacrificing quality and hygiene standards.

### Summary

The invention provides a pasteurising apparatus as set out in claim 1 and a method of operation as set out in claim 12. Various aspects of the apparatus and method are set out in the dependent claims 2-10 and 13-15 respectively.

In various examples we describe a pasteurising apparatus comprising a controller linked to sensors and valves and floors, walls, and ceilings forming a pasteurising compartment and a separate product tank compartment, wherein:
the pasteurising compartment comprises a pasteuriser:
the tank compartment is independently accessed by a door and is adapted to hold at least one product tank; and
the tank compartment is sealed by a dividing wall from the pasteurising compartment.

Preferably, the apparatus further comprises an external connector assembly having couplers and fluid conduits for linking an external supply tank with the pasteuriser, and with a tank in the tank compartment, said connector assembly being mounted externally of the compartments.

Preferably, the pasteuriser compartment is linked by at least one internal supply pipe to the tank compartment; and the connector assembly is linked by a return pipe to the tank compartment.

Preferably, the apparatus is portable, being mounted on feet allowing it to be lifted by a fork-lift machine. Preferably, the pasteuriser compartment comprises a vent and an extractor fan.

Preferably, the tank compartment door is horizontally hinged and forms a ramp, when open, for insertion and removal of tanks from the tank compartment. Preferably, said internal supply pipe extends through the dividing wall.

Preferably, the supply pipe is routed to an upper supply conduit which is connected to at least one spray head for delivery of fluid into a product tank at a top of the product tank.

Preferably, the external connector assembly is linked by a pipe directly to the tank compartment, allowing a flow through for outflow of wash fluid from a product tank.

Preferably, the external connector assembly comprises a plurality of couplers mounted on a support and bridging connectors which are adapted to inter-connect couplers according to a desired configuration for supply of raw food liquid or of wash fluids.

Preferably, the connector assembly links allow a full flow-through from the connector assembly through the pasteuriser and a product tank and back to the connector assembly for a washing operation.

Preferably, the external connector assembly comprises sensors arranged to detect location of a connector in relation to couplers and for generating an alert if one is incorrect for a mode of operation.

We also describe a method for supplying product liquid such as pasteurised milk to a product tank, the method being performed by an apparatus of any example under control of the controller and comprising the steps of:
delivering raw product liquid from an external supply via the external connector assembly into the pasteuriser,
the pasteuriser pasteurising the product liquid and routing pasteurised product liquid via the internal supply line to a tank which has been placed in the tank compartment without access to the pasteurising compartment; and
the filled tank being de-coupled and removed via the separate tank compartment door.

Preferably, the method further comprises the further steps of washing the pasteuriser and an empty product tank, by routing wash liquid into the pasteuriser via the external connector assembly, the pasteuriser routing the wash liquid into the product tank via the internal supply line, and a delivery conduit delivering the wash liquid into the tank, and the wash liquid being returned via the return line to the external connector assembly.

Preferably, the external connector assembly interconnects links so that it completes a closed circuit between the pasteuriser and the product tank.

Preferably, the controller performs automated checks of positions of couplers in the external connector assembly to ensure correct mode of operation.

### Detailed Description of the Invention

The invention will be more clearly understood from the following description of some embodiments thereof, given by way of example only with reference to the accompanying drawings in which:
Fig. 1 is a cut-away plan view of a self-contained pasteuriser facility.
Fig. 2 is a plan view showing a pasteuriser plant of the facility.
Figs. 3 and 4 are perspectives views showing the plant and tanks in more detail.
Figs. 5(a) and (b) are plan and perspective views respectively showing an alternative facility, in this case with vertically hinged doors for access to the tank compartment.
Fig. 6 is a diagrammatic view of a pasteuriser of the facility.
Figs. 7 to 11 are diagrams showing various flow configurations for use of the facility; and
Fig. 12 is a plan view of an alternative pasteuriser facility.

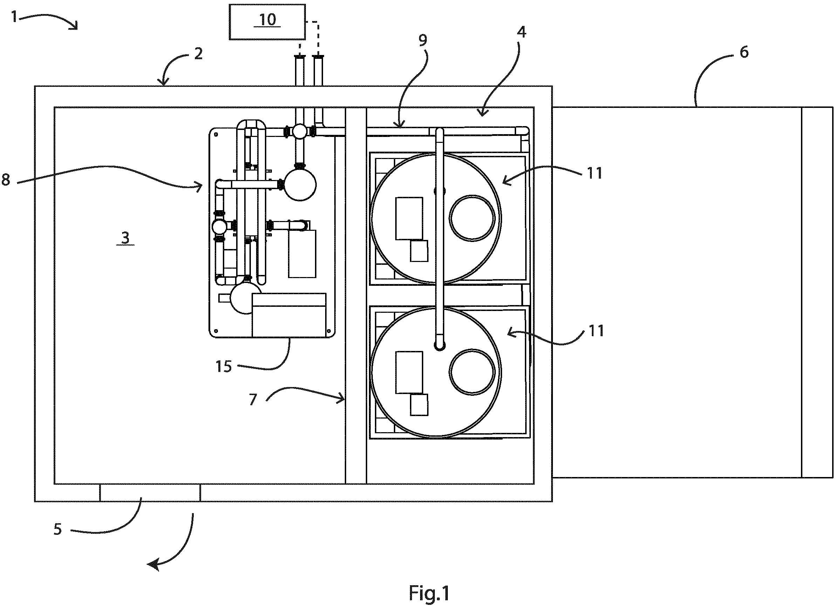

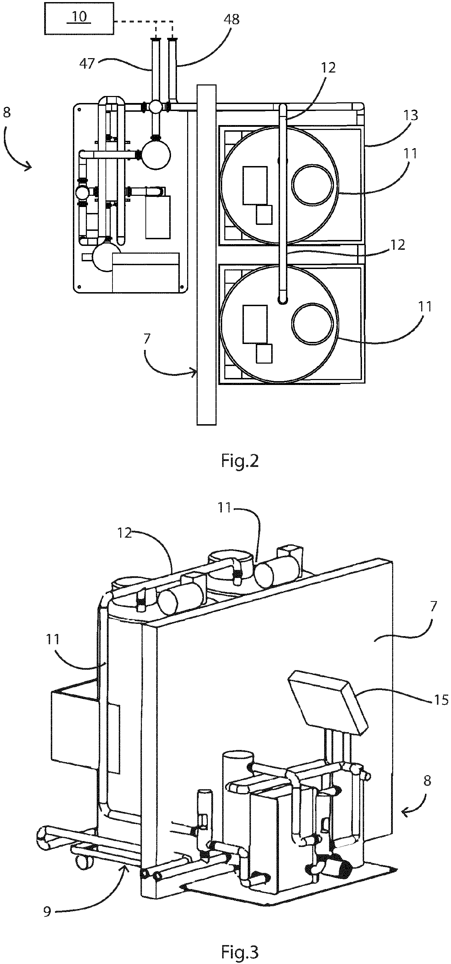

Referring to Figs. 1 to 4 a pasteuriser facility 1 is self-contained, having an enclosed room which does not require entry of personnel during use. The facility 1 comprises a structure 2 forming a pasteurising compartment 3 and a separate tank compartment 4 linked by pipes 9 as shown in Fig. 3. The structure 2 is mounted on feet (not shown), which allows the full facility 1 to be lifted by forklift. A vertically hinged door 5 provides access for personnel into the pasteurising compartment 3 when needed, which is not during normal use. A ramp door 6 provides separate access to the tank compartment 4, which is separated from the pasteurising compartment 3 by an internal wall 7. Unlike the door 5, the ramp door 6 is regularly used for operation of the facility.

There is a process plant 8 within the compartment 3, linked by internal conduits to the tank compartment 4, and to an external connection assembly 10. The tank compartment 4 contains two vertically arranged cylindrical tanks 11 and associated pipework. The pipes include primarily a pipe 13 for wash return flow and a pipe 14 for milk supply and wash supply, this pipe terminating in an upper supply pipe 12. The plant 8 comprises a pasteuriser, an ice chiller, an air compressor, a vent, an extractor fan (not shown), and a PLC controller 15 with digital processors and a user interface.

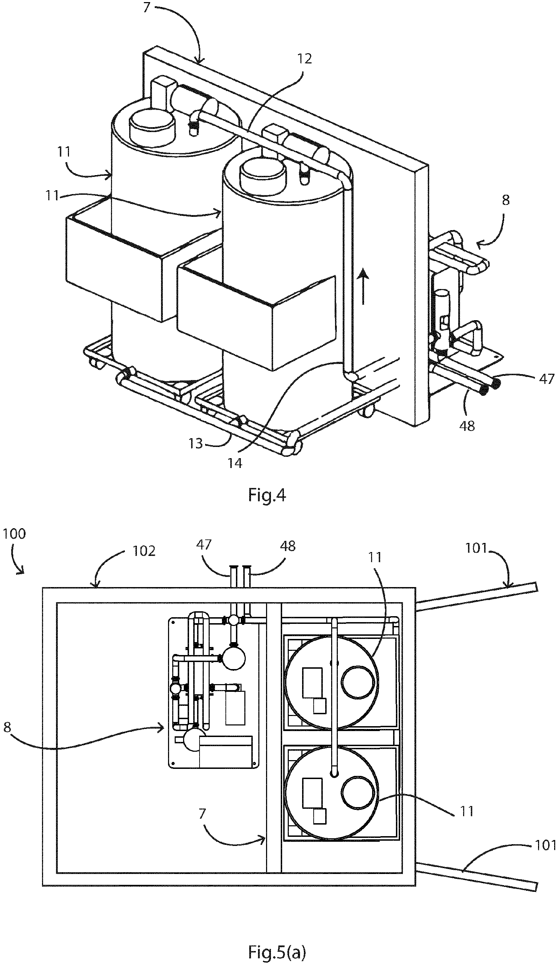

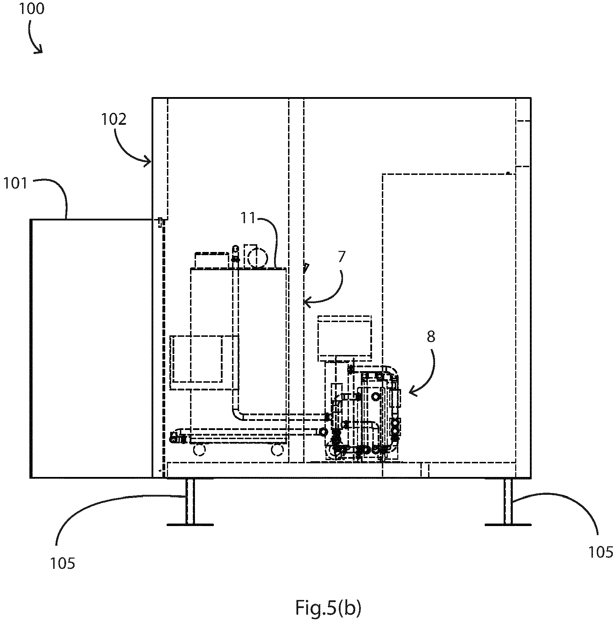

Figs. 5(a) and (b) show an alternative facility, 100, with many components the same as for the facility 1, being indicated by the same reference numerals. However, in this case there are a pair of vertically hinged doors 101 for access to the tank compartment, and the facility wall structure is indicated by the numeral 102. Fig. 5(b) shows legs 105, allowing the facility may be transported.

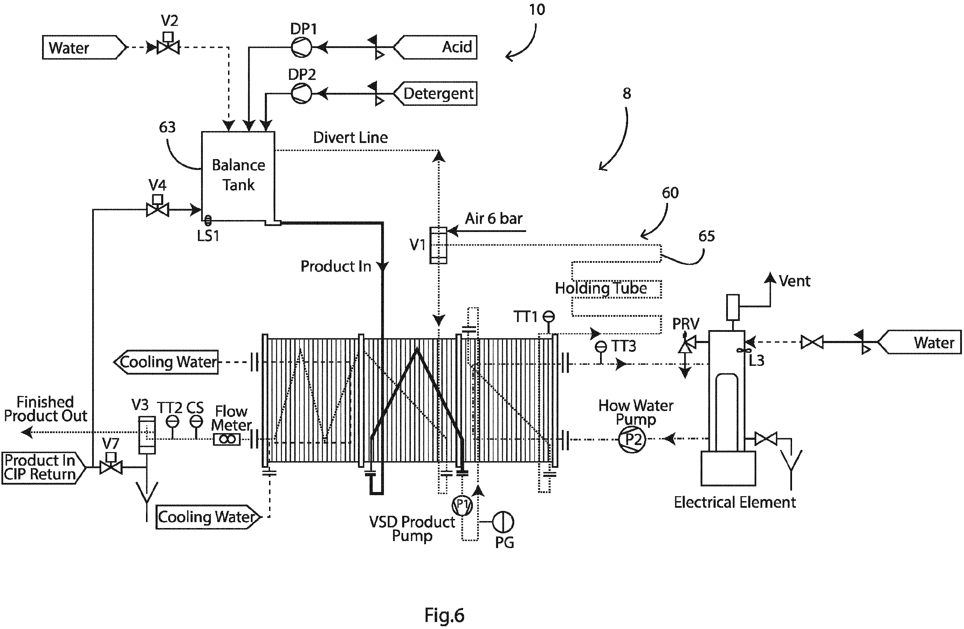

Referring to Fig. 6 the pasteuriser plant 8 comprises a heat exchanger system 60 with a controller and four main stages: Heating, Regeneration I; Regeneration II; and Cooling. Each stage comprises a bank of plate heat exchange (HE) elements of conventional construction. Advantageously, the controller 15 is programmed to not only control normal operation of the pasteuriser 8, but also to automatically perform testing and generate test reports. The stages are connected in flow pipes as shown in Fig. 6, with valves, pumps and sensors connected to the PLC controller 15. The PLC controller 15 is programmed to control and monitor operation of pumps at various stages of testing procedures, operating valves depending on what stage test is carried out and monitoring the pressures and also the temperatures and flow rates. While the diagrams show a user interface on the controller, this is for use outside of normal milk processing, and there is also a linked external interface for real time process data display and user inputs. Advantageously, there is a balance tank 63 in the plant 8 for interfacing with the external flow assembly 10, to assist control of raw milk product into the pasteuriser.

In this example the pasteuriser is of the type described in WO2019141538 (Unison Engineering Services Ltd.), for example. However, it may alternatively be of any other suitable known type known in the art.

The heat exchanger system 60 comprises four main stages: Heating, Regeneration I;4 Regeneration II; and Cooling. Each stage comprises a bank of plate heat exchange (HE) elements of conventional construction. The controller 15 is programmed to not only control normal operation of the system 8, but to also to automatically perform testing and generate test reports. This is for compliance with operational quality control (QC) and regulatory requirements. The stages are connected in circuits as shown in Fig. 6, with valves, pumps and sensors connected to the PLC controller 15. The PLC controller 15 is programmed to control and monitor operation of the pump at various stages of testing procedures, operating valves, depending on what stage test is carried out, monitoring the pressures and also the temperatures and flow rates.

The un-treated product circuit elements are on one side of the stages and the other side is in a hot water circuit. In the regeneration stages the other sides are in a treated product line which begins with the end of a holding tube 65. The treated product line extends through alternate elements of the stages respectively and then into one side of the cooling stage.

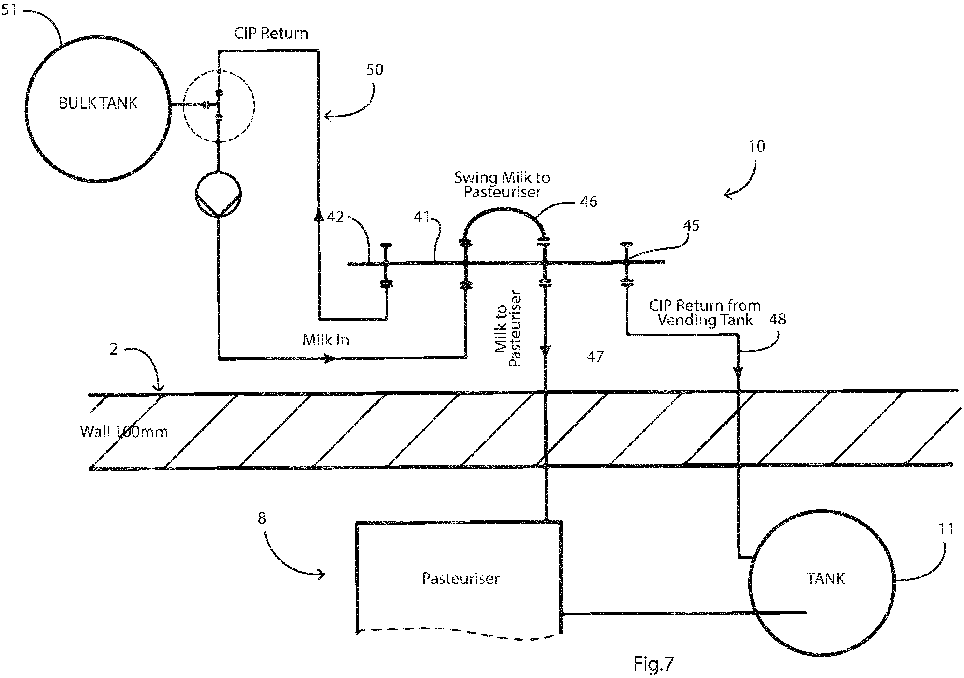

Referring to Figs. 7 to 11 various use configurations are shown for flow of fluids into and out of the facility 1. These are all to provide pasteurised milk in any of one to four tanks 11 which are placed into the tank compartment 4 when the ramp 8 is open. The tanks 11 can be inserted and removed without need to access the pasteurising compartment 3. Such tanks may for example be for a vending machine located nearby or possibly a large distance away. Importantly, the tanks 11 are portable and may be brought empty and taken away when full without need for any knowledge of how the pasteurising is performed and without any risk to the pasteurising compartment 3.

An operator of the facility 1 can use the connector assembly 10 from outside to direct washing of both the pasteuriser 8, its associated pipes, and indeed of tanks 11 placed in the tank compartment 4. The assembly 10 has a flow plate 41 with connectors 42, 43, 44, and 45 for connection of couplers on one side to a supply 50 with a bulk tank 51, and on the other side to the active components in the facility 1. Connectors 46 are used to bridge any two of the couplers 42-45 at the flow plate 41. The couplers 42-45 can be coupled to lines including a pasteuriser line 47 and a tank washing line 48. There are pairs of top and bottom tank lines extending through the wall 7 between the compartments 3 and 4. The drawings show, for each tank 11, a supply line 14 and a return line 13. The tanks 11 have upper spray heads, not shown, which are used for both washing and for flow of pasteurised milk flows from the pasteuriser 8 via the lines 14.

The pasteuriser 8 has a capacity of about 200 L/hour but it can be made to suit much larger pasteurisers 200 to 5,000 L/hour if required.

The chiller water unit and the air compressor of the compartment 3 receive water and electricity supplied via external supplies. The pasteuriser control including starting/stopping the pasteuriser for producing pasteurised milk, flushing with water after pasteurising and changing piping at the flow plate and at the supply tanks do not require an operator to enter the compartment 3. All of the controls for the pasteuriser are controlled externally via a remote start/stop interface, or via a smartphone application. All of the pasteurising operating steps are controlled automatically from start to finish of pasteurising. When the milk is all through the pasteuriser water is introduced for flushing all the milk through the pasteuriser until it is fully rinsed.

When the pasteuriser 8 is rinsed, piping is changed externally at the flow plate 41 using a "swing bend" connector 46 and at the mobile milk tanks 11 to create a wash circuit from the pasteuriser 8 to the top of the milk tanks 11 via the pipes 14, washing the tanks, then gravity feed from the bottom of the milk tanks via the lines 13 to the flow plate 41 connector 45 and from the flow plate back coupler 45 to the pasteuriser 8. This provides a complete wash circuit for cleaning the pasteuriser 8 and milk tanks 11 at the same time. Extra tanks can be filled with milk and then washed after pasteurising by the inclusion of an extra valve for each extra milk tank added.

To fill the tanks 11 with milk, the tanks 11 are connected to the pasteuriser 8 externally in the compartment 4, the raw milk supply is connected to the pasteuriser 8 via the flow plate 41 and confirmed with proximity switches on the flow plate 41 to confirm that the swing connectors 46 are in the correct position for this process. When the pipes are connected the operator confirms this on a remote interface and when it is required to start the pasteuriser this is also started again via the remote interface. The pasteurising of the milk, to the tank or tanks filling and quantity required for each tank is all controlled automatically.

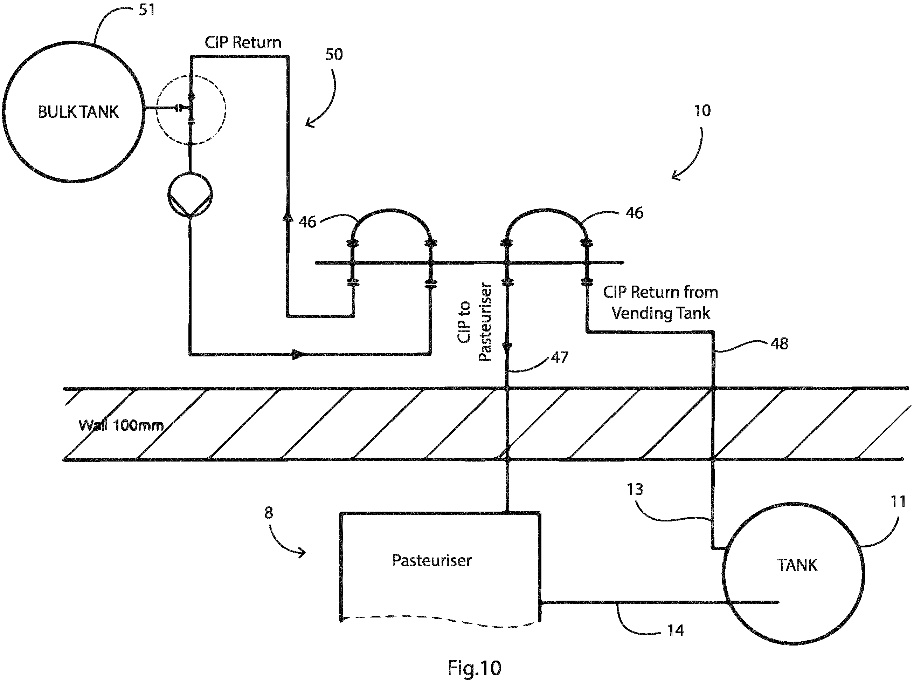

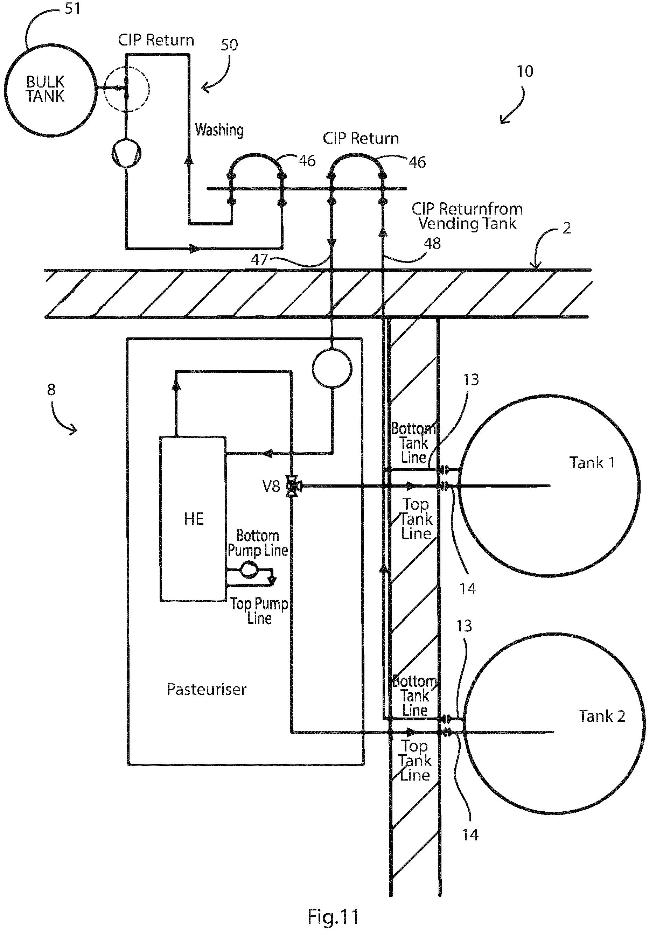

When pasteurisation is finished the pasteuriser 8 shuts down automatically. For washing the pasteuriser (Figs. 10 and 11), the pipes 47, 14 and 13, and 48 for the wash circuit are joined externally. The pipes 14 supply the wash liquid from the pasteuriser 8 and the pipes 13 convey the wash returns. The controller 15 confirms via the position sensors that the circuit is connected and confirmed with proximity switches on the flow plate 41 to confirm the swings bends 46 are in the correct position for this process.

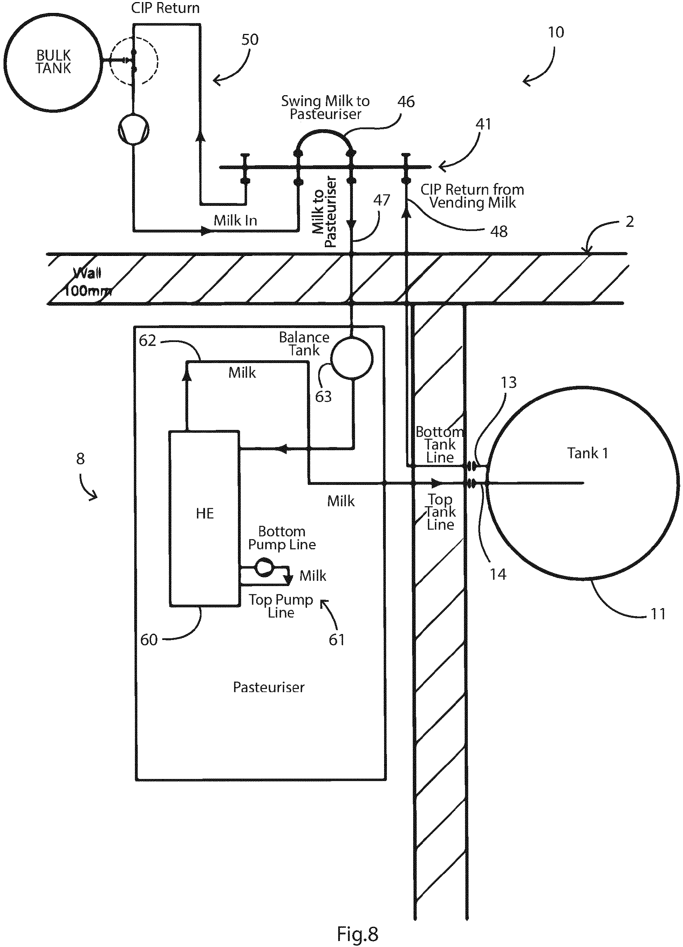

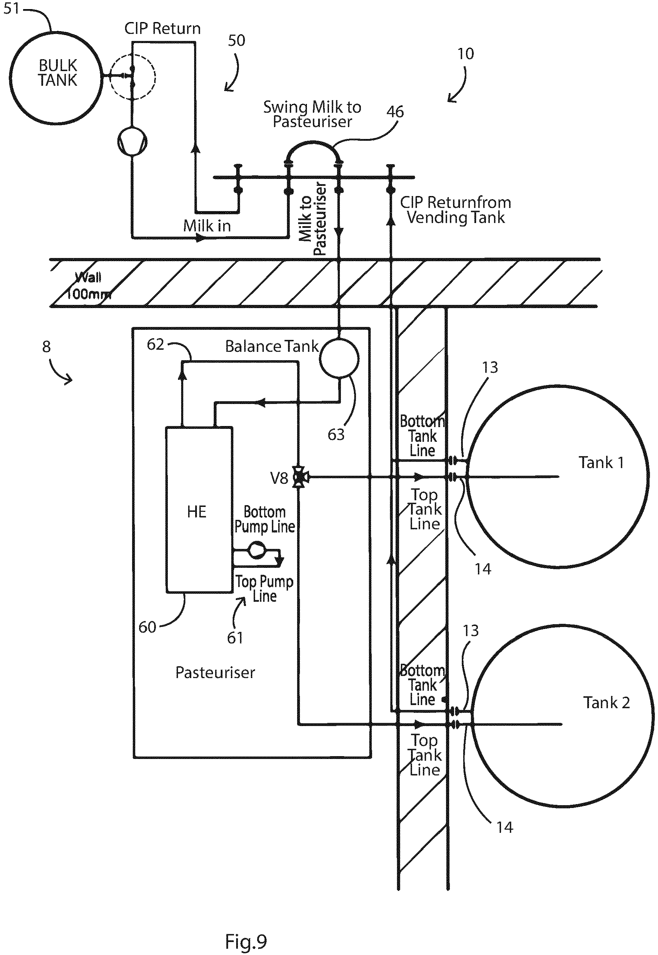

Figs. 7 to 9 show milk being supplied from an external bulk tank 51 to the pasteuriser 8 via the connector assembly 10. Fig. 8 also shows raw milk flow through the balance tank 63 and into pasteuriser heat exchanger 60, from the heat exchanger 60 onward to a tank 11 via the top, supply, line 14. This fills the tank 11 via its internal top spray head. Fig. 9 shows the situation when there are two tanks 11 in the tank compartment 4.

Figs. 10 and 11 show a situation where there are two connectors 46, short-circuiting the raw milk supply and allowing circulation of washing liquid through the pasteuriser 8 and any present destination tanks 11.

The above process allows for the processing of pasteurising milk and filling the mobile milk tanks 11 without the need of an operator to enter the process room 3 to start and complete this task. All of the connections for the pasteurising, filling the milk tanks, washing the pasteuriser, mobile milk tanks and all the process piping are connected externally and their positions confirmed before starting automatically.

Because an operator is not required to enter the pasteurisation process room 3 this will greatly reduce the size of the processing area, therefore also much reducing the cost of the processing building required. The facility 1 can be fabricated and commissioned off site, then supplied to the customer, and lowered to its predetermined position. This will then be connected with water and electricity and can then be operationally within a matter of hours after arriving on site.

The facility 1 is advantageous for processors who want to pasteurise milk for vending machines, as this will greatly reduce the cost for them to enter the pasteurisation process market that now is very expensive due to the existing process and building requirements.

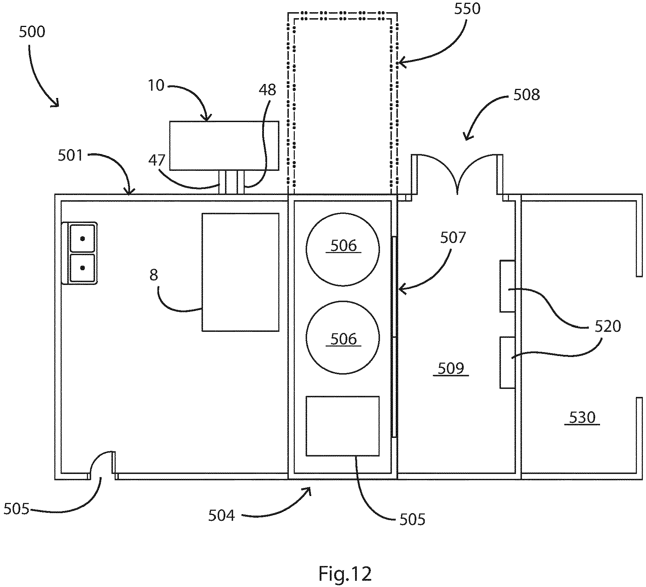

Referring to Fig. 12 an alternative apparatus, 500, comprises a pasteurising compartment 501 housing a pasteuriser 8 which can be of any suitable type. Like parts are given the same reference numerals. The pasteuriser 8 is linked with the external interface 10 via pipes the 47 and 48 as described above. In this case a tanks compartment 504 houses a chiller unit 505 and product tanks 506. This compartment has an insulated door 507. Unlike the other embodiments there is not ready access to the tanks 506 by users, but instead the tanks are designed not to be removed regularly, and they are linked by hoses through a maintenance access room 509 to dispensers 520 which are accessible to users in an easily accessible area 530. The room 509 has vertically hinged doors 508 for access.

The apparatus 500 works in a manner like the other embodiments, except that the product tanks 506 are kept chilled more easily at a uniform temperature because there is not regular access and product is supplied via the dispensers 520.

The apparatus may additionally include an annex room 550 for additional tanks if required.

Advantageously, the chiller 505 serves to chill both the pasteuriser compartment 501 and the tank storage compartment 504, and this extends the storage time for the milk tanks. In a variation of the apparatus 500, instead of having a roller shutter for access to the tank storage area, there may be insulated doors around the tank compartment and the user access area.

The apparatus 500 may be termed a "Smart Micro Dairy (SMD)". The tanks in the storage area 504 do not need to be removed or transported regularly. Tanks in the annex area 550 can be used for transporting the milk to external areas such as shopping centres etc. The milk from the tanks can be fed directly to the vending machine dispensing units 520, removing the need for transporting the milk tank form the pasteurising area to the point-of-sale area.

Avoidance of need to move tanks regularly is very convenient and contributes to health and safety of personnel. As the pasteuriser has its own automatic cleaning facility as described for the other embodiments this can also be used for cleaning the tank and tank milk feed to the vending dispensing unit giving good traceability for HASOP records.

The invention is not limited to the embodiments described but may be varied in construction and detail. For example, the product liquid may not be milk, as it may be any other product liquid which is treated by pasteurising or thermal treatment ("thermizing"), such as beer.

## Claims

1. A pasteurising apparatus (1) comprising a controller linked to sensors and valves and floors, walls, and ceilings forming a pasteurising compartment (3) and a separate product tank compartment 4, wherein:
the pasteuriser compartment (3, 501) comprises a pasteuriser (8):
the tank compartment (4, 504) is independently accessed by a door (6, 507) and is adapted to hold at least one product tank (11, 506);
the tank compartment (4, 504) is sealed by a dividing wall (7, 507) from the pasteurising compartment (3, 501);
the apparatus further comprises an external connector assembly (10) having couplers and fluid conduits for linking an external supply tank (50, 51) with the pasteuriser (8), and with a tank (11) in the tank compartment (4), said connector assembly being mounted externally of the compartments (3, 4, 501, 504);
the pasteuriser compartment (3) is linked by at least one internal supply pipe (14) to the tank compartment (4); and
the connector assembly is linked by a return pipe (13, 48) to the tank compartment (4).

2. An apparatus as claimed in claim 1, wherein the apparatus is portable, being mounted on feet (105) allowing it to be lifted by a fork-lift machine.

3. An apparatus as claimed in any preceding claim, wherein the tank compartment door (6) is horizontally hinged and forms a ramp, when open, for insertion and removal of tanks (11) from the tank compartment (4).

4. An apparatus as claimed in any preceding claim, wherein, said internal supply pipe extends through the dividing wall (7, 507).

5. An apparatus as claimed in any preceding claim, wherein the supply pipe (14) is routed to an upper supply conduit (12) which is connected to at least one spray head for delivery of fluid into a product tank (11, 506) at a top of the product tank.

6. An apparatus as claimed in any preceding claim, wherein the external connector assembly (10) is linked by a pipe (13) directly to the tank compartment (4, 504), allowing a flow through for outflow of wash fluid from a product tank (11, 506).

7. An apparatus as claimed in any preceding claim, wherein the external connector assembly (10) comprises a plurality of couplers (42-45) mounted on a support (41) and bridging connectors (46) which are adapted to inter-connect couplers according to a desired configuration for supply of raw food liquid or flow of wash fluids, and wherein the connector assembly (10) couplers and connectors are configured to allow a full flow-through from the connector assembly (10) through the pasteuriser (8) and a product tank (11, 506) and back to the connector assembly (10) for a washing operation.

8. An apparatus as claimed in claim 7, wherein the external connector assembly (10) comprises sensors arranged to detect location of a connector (46) in relation to couplers (42-45) and for generating an alert if one is incorrect for a mode of operation.

9. An apparatus as claimed in any preceding claim, wherein the tank compartment is chilled by a chiller (505) which controls temperature of both the pasteuriser compartment (501) and the tank compartment (504).

10. An apparatus as claimed in any preceding claim, wherein the product tank (506) is linked with a product dispenser (520) which is accessible to users.

11. An apparatus as claimed in claim 10, wherein the dispensers (520) are linked by hoses passing through a maintenance room (509) between the tank compartment (504) and the dispensers (520).

12. A method for supplying product liquid such as pasteurised milk to a product tank (11), the method being performed by an apparatus of any preceding claim under control of the controller (15) and comprising the steps of:
delivering raw product liquid from an external supply (51) via the external connector assembly (10) into the pasteuriser (8), and
the pasteuriser (8) pasteurising the product liquid and routing pasteurised product liquid via the internal supply line (14) to a tank (11) which has been placed in the tank compartment (4) without access to the pasteurising compartment (3).

13. A method as claimed in claim 12, comprising the further steps of washing the pasteuriser and an empty product tank by routing wash liquid into the pasteuriser via the external connector assembly (10), the pasteuriser routing the wash liquid into the product tank via the internal supply line (14), and a delivery conduit (12) delivering the wash liquid into the tank, and the wash liquid being returned via the return line (13) to the external connector assembly.

14. A method as claimed in claim 13, wherein the external connector assembly (10) interconnects couplers (42-45) so that it completes a closed circuit between the pasteuriser (8) and the product tank (11).

15. A method of any of claims 12 to 14, wherein the controller performs automated checks of positions of connectors (46) in the external connector assembly (10) to ensure correct mode of operation.
